# EUROPEAN PATENT APPLICATION

(11) **EP 4 066 636 A1**
(43) Date of publication of application: **05.10.2022**
(21) Application number: 22164918.9
(22) Date of filing: 29.03.2022
(51) Int. Cl.: A01M 31/00, A01M 23/16, A01M 23/24, A01M 25/00, A01M 1/02, A01M 1/10, A01M 1/20, A01M 23/20

(54) **ANIMAL TRAP AND METHOD OF OPERATING THE ANIMAL TRAP**

(30) Priority: 29.03.2021 NL 2027856
(71) Applicant: Mega-Des Plaagdierbeheersing B.V., 8239 DD Lelystad (NL)
(72) Inventor: MARS, Richard Alexander, 8239 DD Lelystad (NL)
(74) Representative: V.O.

(57) **Abstract**

An animal trap and method for operating the animal trap are provided. The animal trap comprises a housing, a closing member, an actuator module for moving the closing member between an opened state and a closed state an animal extermination module for exterminating an animal inside the housing, a sensor module for detecting a presence of an animal inside the housing and for obtaining animal data on the animal inside the housing, and a controller for controlling the actuator module and the animal extermination module based on the presence detected and animal data obtained by the sensor module.

## Description

### BACKGROUND

The aspects and embodiment thereof relate to an animal trap and a method of operating an animal trap.

### BACKGROUND

In some situations, the presence of one or more particular animals at a particular location may be undesired. For example, the presence of rodents such as rats are often undesired in human occupied areas, such as cities or individual dwellings, or in food, feed and pharmaceutical industries.

It is highly preferred to exterminate unwanted animals to prevent harm to stocks and spread of diseases.

### SUMMARY

As political parties focused at wellbeing of animals and other interest groups focused at animal wellbeing gain more attention and legislation at this point puts more and more restrictions on control of pest animals, it is preferred to exterminate particular animals without causing these animals unnecessary harm and stress and/or to only exterminate certain types of animals and/or to prevent an inhumane death. It may also be preferred to prevent release of toxins into the environment, such as the ground or a water source.

A first aspect provides an animal trap comprising a housing for trapping an animal therein, comprising an animal opening allowing passage of an animal in to the housing, a closing member for restricting passage of an animal through the animal opening, an actuator module for moving the closing member between an opened state and a closed state, wherein in the closed state, the closing member restricts passage of the animal through the animal opening, and in the opened state, the closing member allows passage of the animal through the animal opening, an animal extermination module for exterminating an animal inside the housing, a sensor module for detecting a presence of an animal inside the housing and for obtaining animal data on the animal inside the housing, and a controller for controlling the actuator module and the animal extermination module based on: the presence detected and animal data obtained by the sensor module.

The animal trap may for example be a rodent trap, rat trap, bird trap, bug trap, and/or may be used for trapping any other type of animal. The dimensions of the housing and the animal opening may be chosen according to the particular type(s) of animal(s) that is to be trapped.

The housing may be substantially closed apart from the animal opening. As such, for example, the housing may be substantially liquid-tight, foam-tight or air-tight. One or more venting holes may be present through the housing for example for allowing air comprising oxygen to be pushed out of the housing, for example in order to provide room for other fluids, optionally for the purpose of exterminating pest animals.

The closing member may for example be embodied as a hatch, door, or any other closing member. The closing member may for example be hinged, rotated, slid, translated and/or otherwise movable relative to the housing between the opened state and the closed state.

The actuator module may be connected to the closing member and the housing, for moving the closing member relative to the housing. As examples, the actuator module may be and/or comprise at least one of an electric, hydraulic, magnetic, mechanic, pneumatic actuator, or any combination thereof. The movement of the closing member caused by the actuator module may for example be a rotation, a translation, or a combination thereof.

In the closed state, an animal inside the housing may be trapped inside the housing. In the opened state, an animal inside the housing may leave the housing through the animal opening, and an animal outside the housing may enter the housing through the animal opening.

A lure may be present inside the housing for luring an animal to enter the housing. The lure may be adapted for luring particular types of animals, and may as such provide a particular sound, smell, taste, and/or visual appearance.

The sensor module may comprise one or more sensors, such as one or more cameras, microphones, pressure sensors, optical sensors, any other type of sensor or any combination thereof. The sensor module may comprise a processing unit for processing data obtained by the one or more sensors.

An animal present inside the housing may for example trigger a pressure sensor, may make a noise received by a microphone, may block and/or reflect an optical signal of an optical sensor and/or may be viewed by a camera. The presence of animal in the housing may be detected directly, and/or indirectly by detecting passage of an animal through the animal opening.

Animal data may for example be indicative of a number of animals present in the housing, a weight and/or size of an animal, a species of an animal, a gender of an animal, a sound made by an animal, a visual appearance of an animal, or any other data related to an animal.

Based on at least part of the animal data, the type of animal present inside the housing may be determined. For example, the controller may comprise an electronic processing unit for receiving animal data from the sensor module. The controller may further comprise a memory unit on which animal data is stored from known types of animals. The controller may be arranged to compare the animal data obtained from the animal present in the housing to the known animal data for determining the type of animal present in the housing.

The type of animal may relate to different taxonomic ranks, such as a particular species, genus, family, order or class. Type of animal may further relate to a gender and/or age of the animal. A type of animal may thus for example be "rat", "rabbit", "female rodent" or "adult mouse".

As an option, the animal extermination module may be arranged for filling at least part of the housing with a gas, such as an inert gas or a gas mixture comprising an inert gas. The gas may substitute air inside the housing, and as such, an animal present in the housing will breathe in the gas instead of air. The gas or gas mixture may be substantially free of oxygen, and the animal may suffocate inside the housing by absence of oxygen.

The gas or gas mixture may be supplied substantially in gaseous phase. As a further option, the gas may be supplied contained in a foam. As an even further option, the gas may be the result of a chemical reaction, which may take place inside or outside the housing. If the gas is supplied from outside the housing, the housing may comprise a gas inlet optionally with a valve which may be controlled by the controller when controlling the animal extermination module.

In a foam, the gas is trapped in pockets of a liquid and/or solid material. A foam may have a shape stability in that the foam at least partially does not collapse under its own weight. As such, when a housing is filled with foam, air - known as a mixture of roughly 80% nitrogen and 20% oxygen - inside the housing may be replaced by the foam comprising the same gaseous mixture, another gaseous mixture or a single gas. By virtue of gravity and depending on relative mass of the foam and the gas or gaseous mixture contained therein, first a lower section of the housing may be filled and when more foam is added, also a higher section of the housing may be filled.

As options, at least one of the gas or gaseous mixture, foam, and/or liquid and/or solid for forming the foam may be supplied in replaceable cartridges. The animal extermination module may be arranged for coupling one or more replaceable cartridges to.

Additionally, or alternatively, the animal extermination module may be arranged to exterminate an animal in the animal trap using for example electricity, poison, physical contact with the animal, or any other extermination method. As an addition or alternative to the animal extermination module, an animal incapacitation module may be provided for incapacitating but not killing an animal inside the housing. Hence, throughout the present description, where an animal extermination module is discussed, embodiments are envisioned wherein the animal extermination module is substituted by or complemented by an animal incapacitation module.

In a particular embodiment, the sensor module comprises an animal data sensor for obtaining animal data. The animal data sensor may comprise one or more microphones for receiving sounds made by an animal inside the housing, which sounds may be considered as animal data.

Particular animals may be known to produce particular sounds or sound patterns, which may for example have particular characteristics such as volume, length and frequency content. A database of known animal sounds may be provided, for example on an electronic memory device. Of the known animal sounds, for example, a typical frequency content may be known and stored as an acoustic fingerprint. A data processing device may convert the sounds obtained by the microphone to an acoustic fingerprint, which may in turn be compared with the known fingerprints to determine a type of animal present in the housing.

While obtaining the animal data, the closure member may be either in the open state or the closed state. In embodiments, the controller may control the actuator module to, for example always, move the closing member in the closed position when the presence of an animal in the housing is detected. As such, sufficient time may be available for obtaining sufficient animal data as the animal is trapped within the housing.

A data processing device may be used for determining a type of animal present in the housing based on the obtained animal data. Based on the type of animal, it may be decided to control the animal extermination module to exterminate the animal. Otherwise, it may be determined that it is undesired to exterminate the animal in the housing.

Hence, in embodiments of the animal trap, the controller may comprise a data processing device for determining a type of animal present in the housing based on the obtained animal data, and the controller is arranged for controlling at least one of the actuator module and the animal extermination module based on the determined type of animal present in the housing.

In the latter case, it may be preferred that the animal leaves the animal trap, preferably as soon as possible. As such, when the closing member is in the closed state, the controller may be controlling the actuator module to move the closing member in the opened state such that the animal may exit the housing through the animal opening.

As an option, an animal repelling device may be comprised by the animal trap to repel an animal present inside the housing out of the housing. The animal repelling device may be controlled by the controller, for example after determining the type of animal and deciding the animal is not to be exterminated. The animal repelling device may for example be arranged to generate one or more of a visual signal, audio signal, haptic signal, smell, or any other signal which may repel an animal from the housing.

A biasing element may be present for biasing the closing member in one of the opened state and the closed state. A biasing element may for example comprise a spring, magnet, resilient or elastic element, or any other biasing element arranged for holding the closing member in a first of the opened state and the closed state when insufficient force is applied to the closing member for moving the closing member into a second of the opened state and the closed state. When a biasing element is present, the actuator module may be arranged to provide sufficient force and/or torque for overruling the biasing element and for moving the closing member against the bias. Alternative or additional to a biasing element, gravity may be used for biasing a closing member in one of the opened state and the closed state.

It will be appreciated that the animal data sensor and the animal presence sensor may be the same sensor, and/or that one sensor may provide animal data as well as a sensor signal used for determining the presence of an animal in the housing.

Embodiments of the animal trap may be intended for single-use, i.e. after an animal is exterminated inside the animal trap, the animal trap is to be discarded. As another option, only certain components of the animal trap may be intended for single-use, for example the housing. Alternatively, the animal trap may be arranged to be re-used after an animal has been exterminated in the animal trap. For example, the housing of the animal trap may be cleaned to remove the exterminated animal and optional foam inside the housing.

A second aspect provides a method for operating an animal trap, for example an animal trap according to the first aspect or another type of animal trap. The method comprises, using a sensor module, detecting a presence of an animal inside a housing of the animal trap, when the presence of the animal is detected, using the sensor module, obtaining animal data on the animal inside the housing of the animal trap, based on at least one of the detected presence and the obtained animal data, controlling an actuator module for restricting passage of the animal through an animal opening of the housing; and based on the obtained animal data, controlling an extermination module for exterminating the animal inside the housing.

As an option, when the presence of an animal inside the housing is detected, the method may comprise a step of controlling the actuator module for restricting passage of the animal through the animal opening. For example, a closing member may be moved into a closed state. As another option, the step of controlling the actuator module for restricting passage of the animal through the animal opening may be executed only after determining the type of animal, and determining that based on the type of animal, the animal present in the housing is to be exterminated.

After restricting the passage of the animal through the animal opening, based on the obtained animal data, the method may comprise one of: controlling the actuator module for allowing passage of the animal through the animal opening, or controlling the extermination module for exterminating the animal inside the housing.

Exterminating the animal inside the housing may comprise filling at least part of the housing with a gas, such as an inert gas, for suffocating the animal inside the housing. Examples of a gas are carbon monoxide, carbon dioxide, argon, nitrogen, helium, any other gas or gas mixture which is essentially free of oxygen, or any combination thereof. The gas may be supplied trapped in cells of a foam. The foam may be formed by mixing the gas with a liquid detergent, any by forcing the mixture through a mesh screen. The foam may also be pre-mixed, and supplied in foamed form to the housing.

As an even further option, after exterminating the animal, a signal may be sent to user indicative of the animal being exterminated inside the housing. As such, the user may clean the animal trap such that the trap may be reused. The signal may for example be a visual, haptic and/or audible signal provided by the animal trap. Additionally or alternatively, a signal may be sent to a remote device, such as a computer device or a smartphone, for example via the internet.

It will be appreciated that options disclosed in conjunction with the first aspect may be readily combined and/or exchanged with options disclosed in conjunction with the second aspect, and *vice versa.*

### BRIEF DESCRIPTION OF THE FIGURES

In the figures,
Fig. 1A depicts a rat trap in a first situation;
Fig. 1B depicts a rat trap in a second situation;
Fig. 2A depicts a rat trap in a third situation;
Fig. 2B depicts a rat trap in a fourth situation;
Fig. 3 depicts another embodiment of an animal trap;
Fig. 4A depicts yet another embodiment of an animal trap in a perspective view; and
Fig. 4B depicts the embodiment of Fig. 4A in a top view.

### DETAILED DESCRIPTION

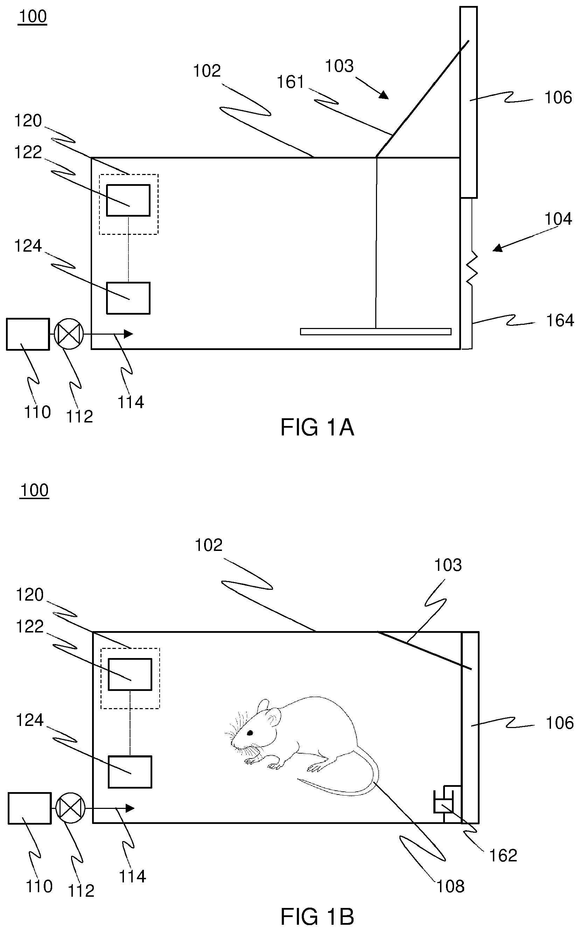

Fig. 1A shows an embodiment of a rat trap 100 as an example of an animal trap. The rat trap 100 comprises a housing 102 with an animal opening 104 allowing passage of an animal, such as a rat, into the housing 102 and out of the housing 102. A hatch 106 as a closing member is provided for selectively restricting and allowing passage of an animal through the animal opening 104. It will be appreciated that an animal trap may comprise more than one animal opening, and may hence also comprise more than one closing member. In particular, an animal trap may comprise separate animal openings for an animal to enter and to exit the housing.
Fig. 1A shows the rat trap 100 is an opened state, wherein passage of an animal is allowed through the animal opening 104. In Fig. 1B, the rat trap 100 is shown in a closed state, with a rat 108 as an example of an animal present in the housing 102. In the closed state, the hatch 106 restricts passage of the rat 108 through the animal opening 104.

For opening and/or closing the hatch 106, an actuator module 103 is provided between the housing 102 and the hatch 106. The actuator module 103 may comprise a closing actuator 161 for closing the hatch 106 and/or an opening actuator 162 for opening the hatch 106. In another example, the actuator module 103 comprises a single actuator for opening as well as closing the hatch 106, which single actuator may thus act as a closing actuator as well as an opening actuator.

The closing actuator 161 is in this example a movable latch arranged to release the hatch 106. In this example, the hatch 106 is biased by a spring 164 as a biasing element to the closed state. The opening actuator 162 may be implemented as an electromotor or another mechanical, electrical, pneumatic or hydraulic actuator to open the hatch 106, against the biasing force of the optional spring 164. An actuator may for example comprise one or more gears, ratchets, pinions, or any other mechanical component.

In embodiments, the weight of the hatch 106 may be sufficient for moving the hatch 106 from the opened positive to the closed position. The closing actuator may be arranged for holding the hatch 106 in place and when the closing actuator is for example moved away to disengage the hatch 106, the hatch 106 may fall under its own weight. For holding the hatch 106 in place, the closing actuator may for example comprise a solenoid operated mechanism.

Embodiments of the animal trap may comprise a pressure plate 166 as a pressure sensor, which may for example be positioned near the animal opening 104. The pressure plate 166 may be mechanically connected to the closing actuator 161, and as such, when an animal steps onto the pressure plate 166, the closing actuator 161 may be activated for moving the hatch 106 to the closed position, for example by allowing the hatch 106 to be moved in the closed position. The pressure plate 166 may also be arranged for sending a signal to a controller for controlling the actuator module 103 for moving the hatch 106 into the closed position.

The rat trap 100 of Figs. 1A and 1B comprises a foam dispenser 110 as an example of an animal extermination module. As depicted in Fig. 1A, at least part of the animal extermination module may be positioned outside the housing 102. Alternatively, the entire animal extermination module may be positioned outside the housing 102 or inside the housing 102.

The foam dispenser 110 may comprise as options one or more of a container for storing a volume of foam, a pump 112 for pumping foam into the housing 102, and one or more foam conduits 114 for transporting foam for example from the container to the housing 102. The volume of foam may be stored under pressure, i.e. under a higher pressure than the pressure outside the container. As such, a pump may not always be required for expelling the foam from the container.

The rat trap 100 further comprises a sensor module 120, in the particular embodiment of Fig. 1A comprising a microphone 122 as a sensor. The rat trap 100 further comprises a controller 124, arranged to receive a sensor signal from the microphone 122. Next to the microphone 122, as further options, one or more other sensors may be present such as a pressure sensor and a video camera, for one or both of detecting a presence of an animal inside the housing and for obtaining animal data on the animal inside the housing.

When a rat 108 is present inside the housing 102, its presence may be detected by the microphone 122. The rat 108 may make sounds when inside the housing 102, which sounds may be picked up by the microphone 122 and converted to an electric signal. The signal may be sent to the controller 124, which may in turn control at least one of the actuator module 103 and the closing actuator 161 in particular, and the foam dispenser 110.

Additionally or alternatively to the microphone 122, a passive infrared sensor (PIR sensor) may be used for detecting the presence of the rat 108 in the housing 102. A PIR sensor measures infrared light radiating from objects in its field of view, and may as such detect infrared light radiating from an animal inside the housing.

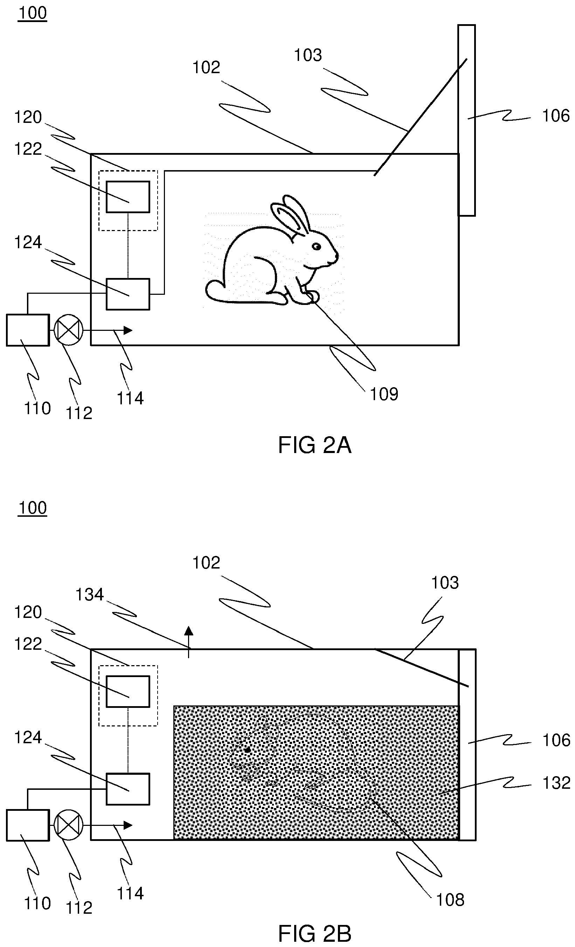

In the situation depicted in Fig. 2A, a rabbit 109 as an example of an animal is present in the housing 102. The type of animal may be determined using the sensor module 120. Based on the type of animal, the controller may control the actuator module 103 not to move the hatch 106 to the closed state such that the rabbit 109 may leave the rat trap 100 without being exterminated. Alternatively, the hatch 106 is closed by means of the closing actuator 161 and the type of animal is determined after the hatch 106 has been closed. If it is determined that an animal is trapped that is not to be exterminated or incapacitated, the hatch 106 is opened by means of the opening actuator 162 to release the animal.

In one implementation, the species or genus of the trapped animal is determined by means of registering sounds produced by the animal. Of the sounds registered, a fingerprint may be generated - a fingerprint is in this case to be considered as a shorter piece of data than the full amount of sound data acquired, like a hash code, frequency analysis, other, or a combination thereof. The registered sound or fingerprint is compared to data in a database, comprising data associated with common animals and animals to be exterminated or incapacitated in particular.

If the data matches - as being equal, equivalent, similar, exactly or within pre-determined boundaries - with data associated with a pest animal to be exterminated or incapacitated, the animal will be exterminated or incapacitated as discussed above and below. If there is no such match, the hatch 106 will be opened as discussed above.

Additionally or alternatively to collecting or registering and determining species or genus of an animal based on sound, like colour, scent, weight, image recognition of the body of the animal or parts thereof, like the head, a signature of fur, other, or a combination of two or more thereof.

It will be appreciated that the actuator module 103 with optional closing actuator 161 and opening actuator 162 are merely depicted schematically in the figures. As an option, the opening actuator 162 and the optional closing actuator 161 may be a servomotor.

In the situation depicted in Fig. 2B, based on the obtained animal data, the controller 124 has determined that the rat 108 is to be exterminated. The controller 124 now controls the foam dispenser 110 to dispense a volume of foam 132 into the housing 102. As such, the rat 108 may become at least partially or even fully submerged in foam. When a gaseous mixture trapped inside the foam is substantially free of oxygen, the rat 108 may suffocate. The gaseous mixture inside the foam comprises preferably at least 80% nitrogen, more preferably 90% nitrogen, even more preferred 95%, 96%, 97%, 98%, 99%, 99,5% or even 99,9% nitrogen. Also preferably, the gaseous mixture is essentially free of carbon dioxide which may cause unnecessary pain or discomfort to the animal.

Because the hatch 106 may be closed when the volume of foam 132 is dispensed, the volume of foam 132 may be contained within the housing. As an option, one or more vents 134 may be present in the housing 102 providing a flow path for air through the housing 102. As such, the dispensing of the volume of foam 132 may push air out of the housing 102 through the one or more vents 134. The one or more vents 134 may be provided in a top halve of the housing 102, or even in the top quarter of the housing 102 or even higher. As such, at least 50%, at least 75% or even more of the housing 102 may be filled with the foam without foam leaking out through the one or more vents 134.

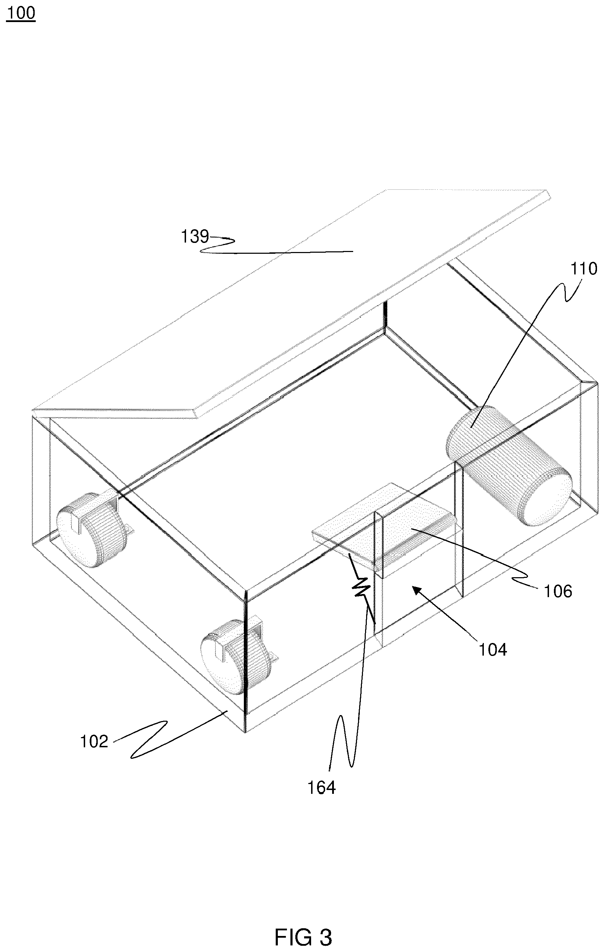

Fig. 3 depicts another embodiment of an animal trap 100, comprising the housing 102 and the animal opening 104. The housing 102 is shown in Fig. 3 transparent to shown the components inside the housing 102. It will be understood that embodiments of the housing 102 may be transparent, opaque, or partially transparent and partially opaque. The housing 102 of Fig. 3 comprises an optional lid 139, which allows access into the housing 102, for example for cleaning or maintenance.

The housing 102 comprises a hatch 106 as a closing member for selectively restricting and allowing passage of an animal through the animal opening 104. In the state of Fig. 3, the hatch 106 allows passage of the animal through the animal opening 104. As depicted in Fig. 3, the closing member may fully restrict the animal opening 104, or only partially restrict the animal opening 104 in the restricting state. The hatch 106 is rotatably connected to the housing 102 to rotate, hinge or swivel relative to the housing 102.

A spring 164 may be used for biasing the hatch 106 into a closed state or an opened state. For example in Fig. 3, the spring 164 is shown in an elongated state. A controllable latch may be used for holding the hatch 106 in the opened state even when the spring 164 forces the hatch 106 into the closed state. For releasing the latch, a solenoid may be used, which solenoid may be operated by the controller based on the presence detected and/or animal data obtained by the sensor module.

A servomotor may be used as a further opening for moving the hatch 106 into an opened state, which may thus require elongating or energizing the spring 164.

In particular, an opening may still be present in the housing when the hatch 106 allows restricts passage of the animal through the animal opening 104. For example, in use, this opening may be positioned above the hatch 106.

As a particular option shown in Fig. 3, a foam canister 110 as a foam dispenser is present inside the housing 102. Inside the foam canister 110, inert gas contained in a foam is present, in particular under a pressure higher than ambient pressure. The foam canister 110 may be sealed by a valve, and the controller may be arranged for opening the valve to release the pressurized foam into housing 102.

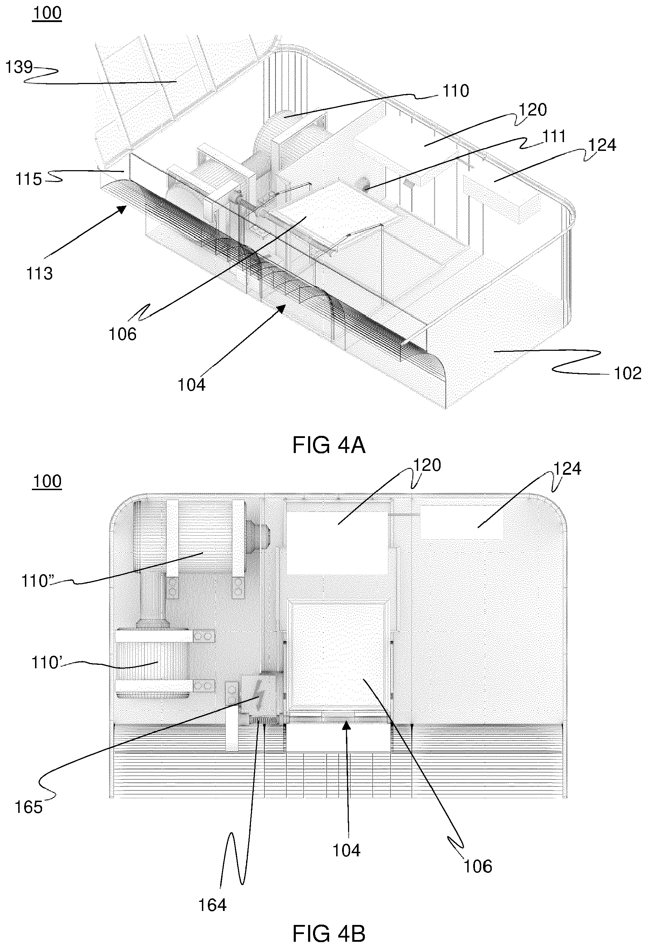

Fig. 4A shows in a perspective view and Fig. 4B shows in a top view yet another embodiment of an animal trap 100, comprising the housing 102 and the animal opening 104. The housing 102 comprises an optional lid 139, which is partially shown in Fig. 4A, in an open position. The animal opening 104 may be closed by means of the hatch 106, which is forced into the closed position by a torsion spring 164. A solenoid 165, which may be controllable by the controller 124, is used to operate a latch for releasing the hatch 106 into the closed position. Before the solenoid 165 is operated, the hatch 106 is held in an open position by the latch.

Inside the housing 102, one or more canisters 110 may be present. An exit opening 111 of a canister may extend into the space of the housing where the animal is trapped in. One or more canisters 110 may comprise different materials, and may be connected. For example, a first canister 110' may comprise a gas and a second canister 110" may comprise a liquid or foam for forming a foam together with the gas. The gas canister may be positioned upstream of the liquid or foam canister.

The animal trap 100 of Figs. 4A and 4B further comprises the sensor module 120, which is as a particular option positioned on an opposite side of the housing than the animal opening 104. The animal trap 100 also comprises a controller 124, connected to the sensor module 120 for receiving one or more sensor signals from the sensor module 120.

As an option which is as other options applicable to any embodiment of the animal trap, a front side 113 of the housing 102 in which the animal opening 104 is present may comprise a curved section 115. The curved section 115 may in use extend at or near a top side of the housing 102. When the housing 102 is placed with the front side 113 against or near a vertical wall, a tunnel is formed which is at a top side enclosed by the curved section 115 of the housing 102. Rats may often walk near walls, and may hence be more prone to enter the housing 102 when the housing is placed with the front side 113 against or near such walls.

In the description above, it will be understood that when an element such as layer, region or substrate is referred to as being "on" or "onto" another element, the element is either directly on the other element, or intervening elements may also be present. Also, it will be understood that the values given in the description above, are given by way of example and that other values may be possible and/or may be strived for.

Furthermore, the invention may also be embodied with less components than provided in the embodiments described here, wherein one component carries out multiple functions. Just as well may the invention be embodied using more elements than depicted in the Figures, wherein functions carried out by one component in the embodiment provided are distributed over multiple components.

It is to be noted that the figures are only schematic representations of embodiments of the invention that are given by way of non-limiting examples. For the purpose of clarity and a concise description, features are described herein as part of the same or separate embodiments, however, it will be appreciated that the scope of the invention may include embodiments having combinations of all or some of the features described. In particular, option disclosed in conjunction with Figs. 1A-2B may be readily applied to the embodiments of Fig. 3 and Figs. 4A and 4B.

The word 'comprising' does not exclude the presence of other features or steps than those listed in a claim. Furthermore, the words 'a' and 'an' shall not be construed as limited to 'only one', but instead are used to mean 'at least one', and do not exclude a plurality.

A person skilled in the art will readily appreciate that various parameters and values thereof disclosed in the description may be modified and that various embodiments disclosed and/or claimed may be combined without departing from the scope of the invention.

## Claims

1. Animal trap, comprising,
- a housing for trapping an animal therein, comprising an animal opening allowing passage of an animal in to the housing;
- a closing member for restricting passage of the animal through the animal opening;
- an actuator module for moving the closing member between an opened state and a closed state, wherein in the closed state, the closing member restricts passage of the animal through the animal opening, and in the opened state, the closing member allows passage of the animal through the animal opening;
- an animal extermination module for exterminating an animal inside the housing;
- a sensor module for detecting a presence of an animal inside the housing and for obtaining animal data on the animal inside the housing; and
- a controller for controlling the actuator module and the animal extermination module based on: the presence detected and animal data obtained by the sensor module.

2. Animal trap according to claim 1, wherein the animal extermination module is arranged for filling at least part of the housing with an inert gas.

3. Animal trap according to claim 2, wherein the inert gas is supplied to the housing contained in a foam.

4. Animal trap according to any of the preceding claims, wherein the sensor module comprises an animal data sensor for obtaining the animal data, the animal data sensor comprising a microphone for receiving sounds made by an animal inside the housing as animal data.

5. Animal trap according to claim 4, wherein the controller comprises a data processing device for determining a type of animal present in the housing based on the obtained animal data, and the controller is arranged for controlling at least one of the actuator module and the animal extermination module based on the determined type of animal present in the housing.

6. Animal trap according to any of the preceding claims, wherein the actuator module comprises a closing actuator for moving the closing member from the opened state to the closed state.

7. Animal trap according to any of the preceding claims, wherein the actuator module comprises an opening actuator for moving the closing member from the closed state to the opened state.

8. Animal trap according to any of the preceding claims, wherein the actuator module further comprises a biasing element for biasing the closing member in the closed state.

9. Animal trap according to any of the claims 6-8, wherein the closing actuator is arranged for holding the closing member in the opened state, and wherein the animal trap comprises a pressure sensor arranged to release the closing actuator from the closing member.

10. Animal trap according to any of the preceding claims, wherein the animal trap is a rat trap for trapping and exterminating rats.

11. Method for operating an animal trap, comprising:
- using a sensor module, detecting a presence of an animal inside a housing of the animal trap;
- when the presence of the animal is detected, using the sensor module, obtaining animal data on the animal inside the housing of the animal trap;
- based on at least one of the detected presence and the obtained animal data, controlling an actuator module for restricting passage of the animal through an animal opening of the housing; and
- based on the obtained animal data, controlling an extermination module for exterminating the animal inside the housing.

12. Method according to claim 11, further comprising:
- when the presence of an animal inside the housing is detected, controlling the actuator module for restricting passage of the animal through the animal opening; and
- after restricting the passage of the animal through the animal opening, based on the obtained animal data, one of:
- controlling the actuator module for allowing passage of the animal through the animal opening; or
- controlling the extermination module for exterminating the animal inside the housing.

13. Method according to claim 11 or 12, wherein exterminating the animal inside the housing comprises:
- filling at least part of the housing with a gas for suffocating the animal inside the housing.

14. Method according to claim 13, wherein the housing is at least partially filled with gas by supplying the gas as bubbles trapped in a foam.

15. Method according to any of the claims 11-14, further comprising, after exterminating the animal, sending a signal to user indicative of the animal being exterminated inside the housing.
